# EUROPÄISCHE PATENTSCHRIFT

(11) **EP 1 743 733 B1**
(45) Veröffentlichungstag und Bekanntmachung des Hinweises auf die Patenterteilung: **19.12.2007**
(21) Anmeldenummer: 06014103.3
(22) Anmeldetag: 07.07.2006
(51) Int. Cl.: B23Q 1/00

(54) **Schnellspann-Vorrichtung mit Austauschzylinder**
Quick connect coupling with changeable cylinder
Raccorde rapide avec cylindre changeable

(30) Priorität: 07.07.2005 DE 102005031784
(43) Veröffentlichungstag der Anmeldung: 17.01.2007
(73) Patentinhaber: Zero-Point-Systems Günther Stark GmbH, 6840 Götzis (AT)
(72) Erfinder: Stark, Günther, 6972 Fussach (AT)
(74) Vertreter: Riebling, Peter

(56) Entgegenhaltungen:
- EP-A1- 1 208 937
- EP-B1- 0 858 862
- DE-A1- 10 118 808
- DE-C1- 19 757 430
- DE-U1- 29 922 119

## Beschreibung

Gegenstand der Erfindung ist eine Schnellspann-Vorrichtung mit Austauschzylinder nach dem Oberbegriff des Patentanspruches 1.

Beispielsweise aus den DE 197 57 430 C1 und der EP 0 858 862 B1 sind Schnellspannzylinder der eingangs genannten Art bekannt geworden. Derartige Schnellspannzylinder bestehen in der Regel aus einem Zylindergehäuse, welches einen Deckel aufweist, der mit mehreren Schrauben auf der Oberseite einer Verschlussplatte oder einem Maschinentisch aufgeschraubt ist, wobei durch den Deckel eine Aufnahmeöffnung ausgebildet ist, in den ein Einzugsnippel verriegelbar eintaucht.

Der Einzugsnippel ist in an sich bekannter Weise mit einer Palette oder direkt mit einem Werkstück versehen, welches in nicht näher dargestellten Maschinen genau bearbeitet wird.
Die Verriegelungseinrichtung im Gehäuse der Schnellspann-Vorrichtung besteht aus am Umfang des Einzugsnippels verteilt angeordneten Verriegelungskörpern, die sich in der Verriegelungsstellung formschlüssig an der Außenseite des Einzugsnippels anlegen und die in der Entriegelungsstellung von dem Außenumfang des Einzugsnippels abgehoben werden.

Zu diesem Zweck arbeiten die Verriegelungskörper mit einem im Gehäuse der Schnellspann-Vorrichtung verschiebbar angeordneten Kolben zusammen, dessen eine Seite von einem Druckmedium beaufschlagt wird und dessen andere Seite von einem Federpaket beaufschlagt ist.

In der Verriegelungsstellung wirkt somit der Kolben unter der Kraft eines oder mehrerer Federpakete federbelastet gegen die Verriegelungskörper und drückt diese in ihren formschlüssigen Einsatz am Außenumfang des Einzugsnippels.

In der Entriegelungsstellung wird entgegen der Kraft des Federpaketes in den Zylinderraum ein Druckmedium eingeführt, verschiebt den Kolben in seine Lösestellung, so dass die Verriegelungskörper vom Außenumfang des Einzugsnippels abgehoben werden.

Eine derartige Schnellspann-Vorrichtung hat sich in vielfältigen Ausführungsformen bewährt und sich in der Maschinenindustrie in breitem Umfang durchgesetzt.

Allerdings hat sich herausgestellt, dass der Innenraum des Gehäuses einer starken Korrosion ausgesetzt ist. Wie eingangs ausgeführt, kann das Gehäuse entweder als separates Gehäuse auf einem Maschinentisch befestigt werden, oder es kann auch als Einlassgehäuse in Form einer Aufnahme im Maschinentisch ausgebildet sein.

In beiden Fällen ist es notwendig, in diesem Gehäuse einen Zylinderraum für den Druckmittel betätigten Kolben zu schaffen, bei dem die Zylinderwandungen besonders korrosionsanfällig sind.

Bei Einwirken von Korrosion oder Beschädigungen der Zylinderwandungen gelingt es meistens nicht, entsprechende Reparaturmaßnahmen im Maschinentisch selbst auszuführen. Zu diesem Zweck müsste die im Maschinentisch eingelassene Ausnehmung ausgedreht, überschliffen oder gehont werden, was mit hohem Aufwand verbunden ist.

Wenn es zu Beschädigungen der Verriegelungseinrichtung kommt, wird gewaltsam der Kolben verkantet und läuft mit seinen Seitenflächen an den Zylinderwandungen auf, die dadurch beschädigt werden. Eine Reparatur ist auch in diesem Fall nur schwer möglich.

In der Regel muss deshalb die gesamte Schnellspann-Vorrichtung mit dem Gehäuse ausgetauscht werden, sofern es sich überhaupt um ein separates Gehäuse handelt. Ist jedoch eine Aufnahmeöffnung im Maschinentisch vorgesehen, ist eine Reparatur in der Regel nicht möglich.

Besondere Nachteile haben sich herausgestellt, wenn die Verschlussplatte (auch nachfolgend als Verschlussgehäuse bezeichnet) oder auch der Tisch aus einer Aluminium-Legierung bestehen. Bei einer Korrosion an der Innenseite der Zylinderwandung im Bereich der Lauffläche des Kolbens kommt es damit zu irreparablen Schäden, und zwar dergestalt, dass die zur Abdichtung notwendigen O-Ringe durch Auflaufen auf die korrodierten Stellen zerstört werden und hierdurch ein unerwünschter Drucköl eintritt in den ansonsten leeren Raum für das Federpaket passiert. Sobald Drucköl aus dem Druckraum im Gehäuse in den Federraum eintritt, kommt es zu einer Selbstblockade der Verriegelungseinrichtung, d. h., der Kolben kann unter Einwirkung eines Druckmediums nicht mehr gegen das Federpaket bewegt werden, blockiert in der Verschlussstellung, und es ist nicht mehr möglich, die gesamte Vorrichtung zu öffnen. Es kann dann nur noch ein Absprengen des Einzugsnippels zusammen mit dem Deckel des Gehäuses (bei Zerstörung der Schrauben) dadurch vorgenommen werden, dass ein Vielfaches des üblichen Öldruckes in den Druckraum eingeführt wird.

Es wurden also beim Stand der Technik zwei Nachteile erkannt, einmal die Anfälligkeit der Laufflächen des Kolbens gegen Korrosion und die damit verbundenen Probleme und zum Anderen der Nachteil, dass der Federraum lediglich luftgefüllt ist und aufgrund von eindringender Feuchtigkeit ebenfalls auch dort Korrosion stattfinden kann.

Der Erfindung liegt deshalb die Aufgabe zugrunde, eine Schnellspann-Vorrichtung der eingangs genannten Art so weiterzubilden, dass Korrosionserscheinungen im Innenraum des Gehäuses weitgehend beherrscht werden können.

Zur Lösung der gestellten Aufgabe ist die Erfindung dadurch gekennzeichnet, dass im Gehäuse der Schnellspann-Vorrichtung ein etwa topfförmiger Austauschzylinder abdichtend eingesetzt ist, der die Laufflächen für den Kolben und den Federraum für das Federpaket ausbildet.

In einer bevorzugten Ausgestaltung dieser Idee ist es vorgesehen, dass der Austauschzylinder insgesamt rostfrei ausgebildet ist. Hierbei gibt es verschiedene Maßnahmen, um dieses Ziel zu erreichen.

In einer ersten Ausführungsform ist es vorgesehen, dass der Austauschzylinder mit seiner Ausbildung der Laufflächen für den Kolben den Raum für das Federpaket aus einem rostfreien Stahl besteht.

In einer anderen Ausgestaltung kann die Rostfreiheit der inneren Laufflächen und der Flächen des Federpaketes auch durch andere Maßnahmen erreicht werden, z. B. durch Nitrieren der entsprechenden korrosionsgefährdeten Oberflächen, durch Verchromen, Vernickeln und dergleichen Maßnahmen mehr, die dem Fachmann bekannt sind.

Wichtig ist bei der technischen Lehre der Erfindung, dass nun nicht mehr das Gehäuse selbst der Schnellspann-Vorrichtung für die Laufflächen des Kolbens verwendet wird, sondern ein in das Gehäuse eingesetzter Austauschzylinder, der demzufolge leicht austauschbar in die Gehäuseausnehmung eingesetzt ist.

Hierbei ist es gleichgültig, von welcher Seite her der Austauschzylinder eingesetzt ist. Er kann von der Oberseite in das Gehäuse eingesetzt werden, er kann jedoch auch von der Unterseite in das Gehäuse eingesetzt werden.

Wichtig ist bei allen Ausführungsformen, dass zunächst der vorgesehene Austauschzylinder durch Reparatur herkömmlicher Schnellspann-Vorrichtungen bestimmt ist. In diesem Reparaturfall wird demzufolge lediglich der Deckel der Vorrichtung abgeschraubt, und es wird ein erfindungsgemäßer korrosionsfreigemachter Austauschzylinder in die Aufnahmeöffnung im Gehäuse eingesetzt.

Es werden dann neue Garnituren für den Kolben, das Federpaket und die Verriegelungskörper verwendet, die bevorzugt ebenfalls korrosionsbeständig ausgebildet sind.

Hierbei ist es - wie ausgeführt - gleichgültig, von welcher Seite in das vorhandene Gehäuse der Austauschzylinder eingesetzt wird. Wichtig ist nur, dass er abdichtend in das Gehäuse so eingesetzt wird, dass er die vorherigen, korrosionsanfälligen Laufflächen ersetzt und stattdessen radial einwärts gerichtete, mit geringerem Durchmesser gegebene Laufflächen für einen kleineren Kolben und ein dazugehörendes Federpaket bildet. Es handelt sich also um einen Reparatursatz, so dass also eine komplette Austauschgarnitur in eine vorhandene Öffnung eines Gehäuses eine Schnellspann-Vorrichtung eingesetzt wird.

Hierauf ist die Erfindung jedoch nicht beschränkt. Es kann in einer anderen Ausgestaltung der Erfindung auch vorgesehen sein, dass von vorne herein eine Schnellspann-Vorrichtung mit einem austauschbaren Austauschzylinder geschaffen wird, so dass es bei Beschädigungen oder aus anderen Gründen ohne Weiteres möglich ist, den gesamten Zylinder auszutauschen, wenn dies erforderlich ist.

Damit ergeben sich gegenüber dem Stand der Technik wesentliche Vorteile, denn es kommt nicht mehr auf die Materialzusammensetzung des Verschlussgehäuses oder der Ausnehmung im Maschinentisch an, weil dieses Material sozusagen von dem Austauschzylinder überbrückt und "ersetzt" wird. Alle Laufflächen und alle korrosionsgefährdeten Stellen sind nun in den Bereich des Austauschzylinders verlegt, der - nach der oben stehenden technischen Lehre - korrosionsfrei gemacht ist.

Damit ergibt sich der weitere Vorteil, dass bei der Herstellung einer derartigen Schnellspann-Vorrichtung nur eine Abdichtfläche im Bereich des vorhandenen Gehäuses für den Deckel fein bearbeitet werden muss, was mit einem sehr geringen Maschinenaufwand geschehen kann, weil diese Fläche sehr kleinflächig ist.

Der gesamte Rest der Ausnehmung im Gehäuse, im Maschinentisch oder im Verschlussgehäuse ist jedoch mit seinen korrosionsanfälligen Laufflächen ersetzt und in diesen Aufnahmeraum wird der Austauschzylinder abdichtend eingesetzt.

Zur Lösung der Aufgabe der Erreichung einer gewissen Korrosionsfreiheit im Innenraum der Schnellspann-Vorrichtung dient auch die zweite technische Lehre, die sowohl in Kombination als auch in Alleinstellung zu der oben genannten ersten technischen Lehre Schutz genießen soll.

Nach der zweiten technischen Lehre ist es nämlich vorgesehen, dass mindestens der Raum für das Federpaket mit einem Schutzöl gefüllt ist, so dass auch in diesem Raum keine Korrosionsgefahr für das Federpaket besteht und die Federn überdies dadurch geschmiert sind.

In einer Weiterbildung dieser Idee ist es vorgesehen, dass nicht nur der Raum für das Federpaket mit einem Schutzöl gefüllt ist, sondern auch alle anderen, luftberührten Räume im Innenraum des Gehäuses, die korrosionsgefährdend sind. Insbesondere gehört hierzu der Verschiebungsraum für den Kolben, der ebenfalls mit dem Schutzöl gefüllt ist. Wird der Kolben dann aufgrund einer Druckerhöhung im Druckraum in den Verschiebungsraum hinein verschoben, dann wird das dort lagernde Schutzöl in die Unterseite an den Kolben geführt, um so keine unerwünschte Druckerhöhung bei der Kolbenverschiebung zu bewirken.

Kurz gesagt läuft der Kolben demzufolge im Ölbad eines Schutzöls und ebenso ist das Federpaket vollkommen im Schutzöl eingebettet.

Es handelt sich also um ein dauergeschmiertes Gehäuse einer Schnellspann-Vorrichtung mit einem dauergeschmierten Kolben und einem zugehörenden Federpaket, wobei alle Laufbahnen des Kolbens dauergeschmiert sind.

Ein weiterer Vorteil bei der Verwendung eines dauergeschmierten, mit Schutzöl gefüllten Gehäuses ergibt sich in Verwirklichung einer bestimmten Sicherheitsfunktion. Sollte nämlich die Abdichtung in Richtung auf den ölgefüllten Druckraum des Kolbens versagen, dann tritt das unter hohem Druck stehende Druckmedium in den mit dem Schutzöl gefüllten Federraum des Gehäuses ein, und es wird hierdurch eine Erhöhung des Innendrucks im Schutzölbereich ausgeführt. Diese Erhöhung in diesem Bereich führt dann dazu, dass ein Sicherheitsstopfen aus der Einfüllöffnung für das Schutzöl verdrängt wird und das Schutzöl ungehindert ausfließen kann. Auf diese Weise wird eine unerwünschte Selbstarretierung der Schnellspann-Vorrichtung mit Sicherheit vermieden. Vorteil dieser Maßnahme ist also, dass der Kolben einen radial außen liegenden Druckraum und einen radial einwärts gelegenen Schutzölraum aufweist, in dessen Bereich das Federpaket angeordnet ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine erste Ausführungsform einer Schnellspann-Vorrichtung;
- Figur 2:: die Draufsicht auf die Anordnung nach Figur 1;
- Figur 3:: Schnitt durch eine zweite Ausführungsform einer Schnellspann-Vorrichtung;
- Figur 4:: Schnitt durch eine dritte Ausführungsform einer Schnellspann-Vorrichtung;
- Figur 5:: Schnitt durch eine vierte Ausführungsform;
- Figur 6:: die Draufsicht auf die Anordnung nach Figur 5;
- Figur 7:: die Unteransicht des Deckels nach Figur 5;
- Figur 8:: Schnitt durch eine weitere Ausführungsform einer Schnellspann-Vorrichtung;

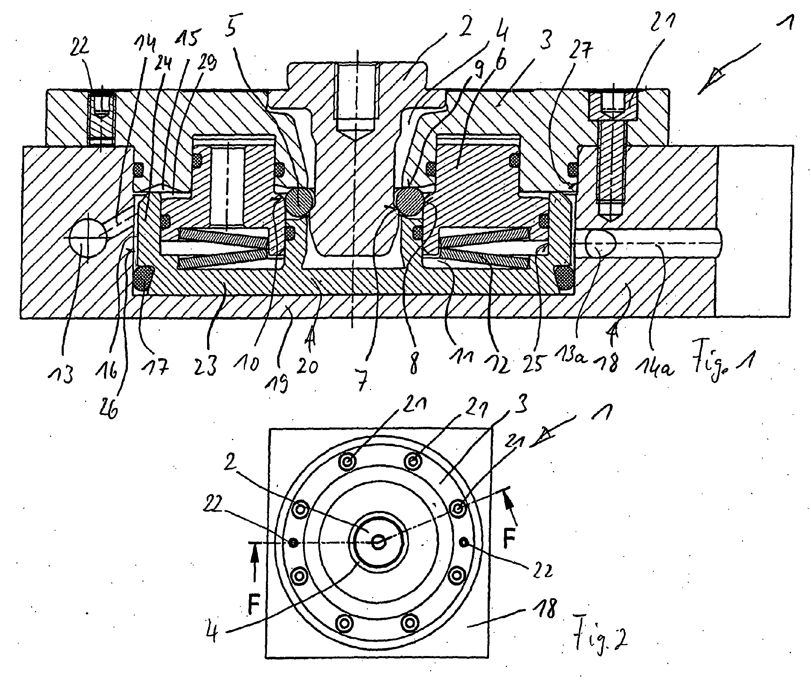

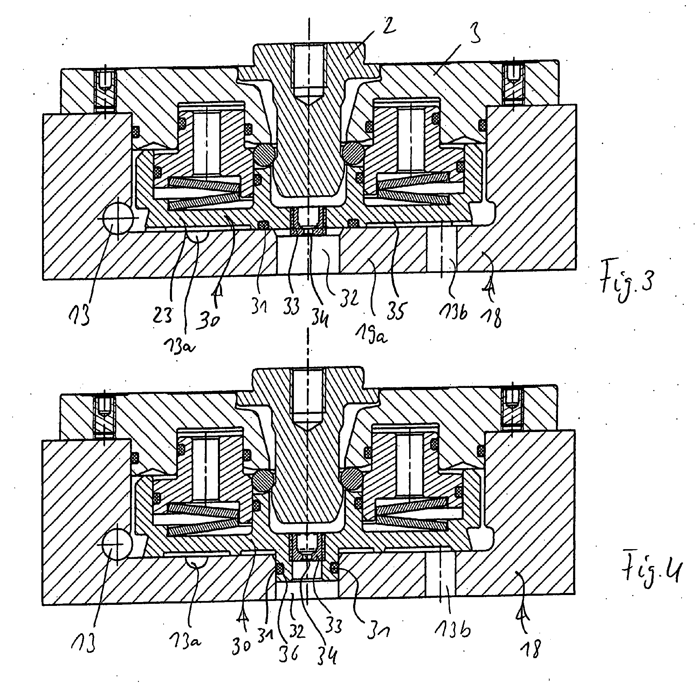

Die Schnellspann-Vorrichtung 1 nach den Figuren 1 und 2 weist im wesentlichen einen Einzugsnippel 2 auf, der gemäß der Darstellung in Figur 8 über eine Schraube 40 mit einer Palette 39 oder direkt mit einem Werkstück verbunden sein kann. Das Werkstück 39 wird dann direkt bearbeitet. Ebenso kann ein Werkstück auf der Palette aufgespannt sein und dort verschiedenenartigen Bearbeitungsvorgängen zugeführt werden.

Die Schnellspann-Vorrichtung 1 bildet ein Gehäuse 18 aus, welches auch als Verschlussgehäuse ausgebildet ist oder das als nach oben offene Ausnehmung in einem Maschinentisch eingelassen sein kann. Wenn in der folgenden Beschreibung von einem Verschlussgehäuse 18 die Rede ist, sollen auch alle anderen vorher genannten Ausführungsformen damit erfasst und beschrieben sein.

Das Verschlussgehäuse 18 wird durch einen Deckel 3 von oben her verschlossen, der mit einer Anzahl von gleichmäßig am Umfang verteilt angeordneter Schrauben 21 (siehe Figur 2) auf dem Verschlussgehäuse 18 abdichtend aufgesetzt ist.

Durch den Deckel 3 ragt eine Einlauföffnung 4 für den Einzugsnippel 2, und es ist eine Fangvorrichtung im Innenraum des Gehäuses angeführten Einzugsnippel 2 angeordnet, die aus einer Anzahl von gleichmäßig am Umfang verteilt angeordneter Verriegelungskörper 5 besteht, die sich im gezeigten Spannfall nach Figur 1 formschlüssig an den Außenumfang des Verriegelungskörpers 5 anlegen.

In diesem Spannfall ist der in der Innenseite des Gehäuses 18 verschiebbar angeordnete Kolben 6 in seine obere Verschiebungsstellung durch die Kraft eines Federpaketes 12 gedrückt worden, wobei gleichzeitig die Verriegelungskörper 5 radial einwärts gegen den Außenumfang des Einzugsnippels 2 gepresst werden. Sie finden ein Gegenlager an der Oberseite des Deckels im Bereich einer dort angeordneten Anschlagfläche 9. Gleichzeitig werden sie durch eine radial schräg nach innen gerichtete Schräge 8 gegen die Außenseite des Einzugsnippels 2 gepresst und laufen hierbei auf einer am Außenumfang des Einszugsnippels ausgebildeten Schräge 7 auf, so dass es zu einer absolut sicheren Verriegelung kommt. Statt der Schräge 7 kann auch ein geeigneter Radius verwendet werden. Der Kolben 6 weist noch eine Schnellhub-Schräge 10 auf, die dazu dient, beim Öffnen der Verriegelungseinrichtung die Verriegelungskörper 5 möglichst schnell außer Eingriff mit dem Einzugsnippel 2 zu bringen.

Die eigentliche Verriegelungskraft wird jedoch durch die Schräge 8 am Kolben 6 aufgebracht.

Die Neigung dieser Schräge ist bevorzugt unterhalb der Selbsthemmung, d. h. es kommt zu einer Selbstklemmung der Anordnung.

Wichtig ist nun, dass im Gehäuse 18 ein sogenannter Austauschzylinder 20 eingesetzt ist, der bevorzugt korrosionsfest ausgebildet ist.

Dieser Austauschzylinder 20 weist im Ausführungsbeispiel einen durchgehenden, topfförmigen Boden 23 auf, an den sich nach oben gerichtete flanschartige Seitenwände 24 werkstoffeinstückig anschließen.

Selbstverständlich ist die Erfindung nicht auf eine solche topfförmige Ausbildung eines Austauschzylinders 20 beschränkt. Es kann auch vorgesehen sein, dass die Seitenwände 24 über zugeordnete Befestigungsmittel mit dem Boden 23 verbunden sind, d.h. der Austauschzylinder 20 muss nicht notwendigerweise ein werkstoffeinstückiges Teil sein.

Er besteht bevorzugt aus einen korrosionsfesten Material, wie es in der allgemeinen Beschreibung eingehend beschrieben wurde.

Wichtig ist nun, dass die axial nach oben gerichteten Seitenwände 24 praktisch die korrosionsbehafteten, ursprünglichen Zylinderwände 26 des Gehäuses 18 abdecken und ersetzen. An diesen korrosionsbehafteten Zylinderwänden 26 des Verschlussgehäuses 18 lief der ursprüngliche Kolben mit seinen Abdichtelementen und aus der Zeichnung ist erkennbar, dass diese Zylinderwand 26 nun vollkommen funktionslos wird, wenn der erfindungsgemäße Austauschzylinder 20 eingesetzt wird, der sogar noch ein radiales Spiel 16 zu der korrosionsbehafteten Zylinderwand 26 aufweist.

Damit ist der Austauschzylinder 20 aufgrund der verwendeten Abdichtelemente (O-Ringe 17) schwimmend in der Ausnehmung des Gehäuses 18 gelagert und bildet von sich aus die zugeordneten Laufflächen für den Kolben 6 und gleichzeitig auch den Aufnahmeraum für das Federpaket 12 aus.

Bevorzugt wird es hierbei, wenn der von dem Druckmedium beaufschlagte Druckraum 29 sich in das radiale Spiel 16, d. h. an den Außenumfang der Zylinderwand 26 erstreckt, weil das Drucköl eine Verbiegung der Seitenwand 24 verhindert und diese Seitenwand stabilisiert. Es bedarf daher keiner großen Materialstärken, weil der Druckölraum 29 sein Drucköl auch in den radialen Spalt 16 überleitet.

Es wird also ein Druckraum 29 mit relativ geringer Fläche einem großvolumigen Stützraum im Bereich des radialen Spaltes 16 gegenübergestellt.

Das Drucköl wird im übrigen über die Druckzuführung 13 und einen zugeordneten Kanal 14 in den Ölraum 29 und in den radialen Spalt 16 eingeführt.

Wichtig ist nun, dass der Kolben 6 insgesamt in einen Zylinderraum 11 läuft, der in einer ersten Ausgestaltung luftgefüllt oder mit einer Schutzgasatmosphäre gefüllt sein kann.

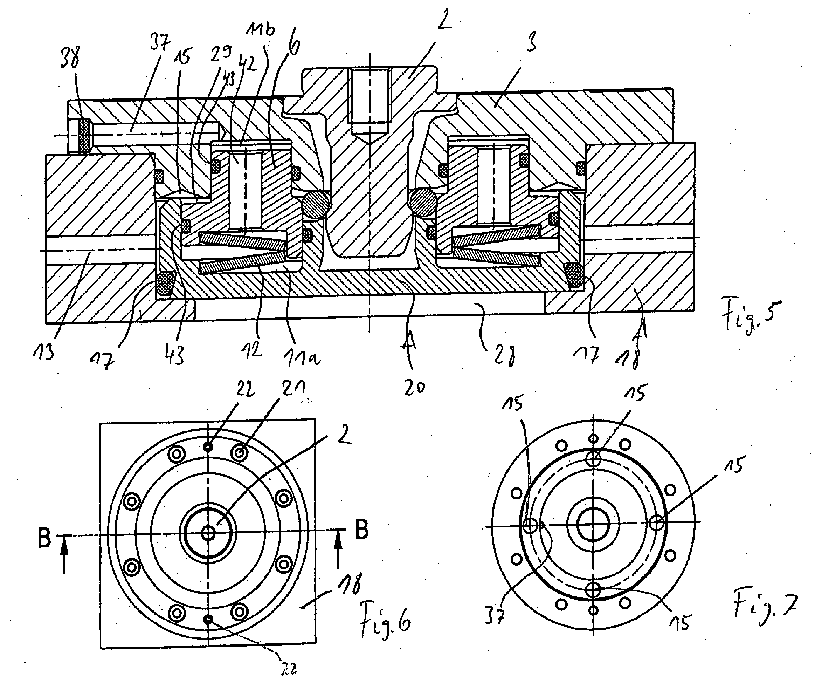

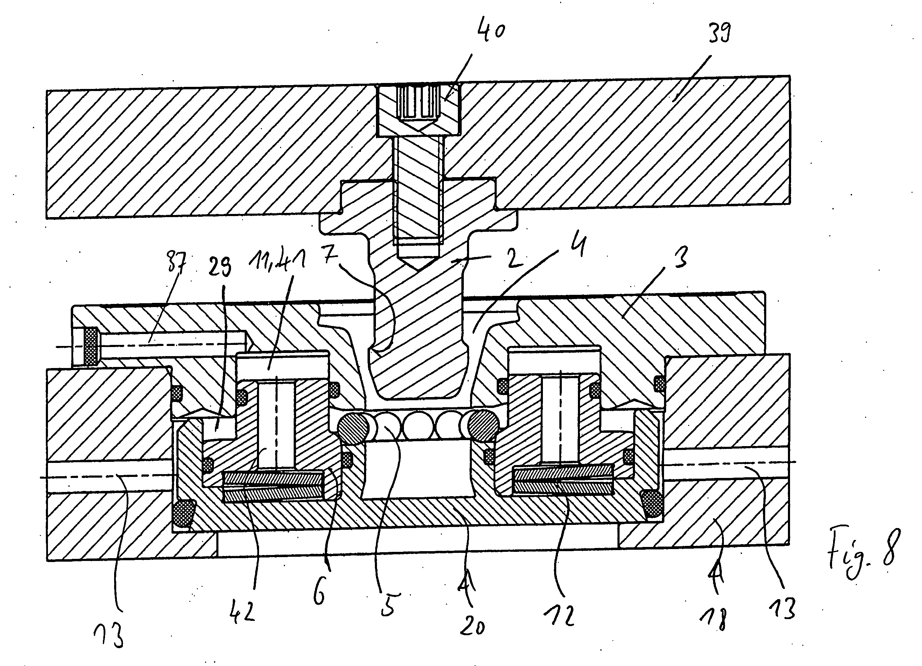

Im weiteren, später zu beschreibenden Ausführungsbeispiel nach den Figuren 5 bis 8 ist dann vorgesehen, dass der gesamte Zylinderraum 11 mit einem Schutzöl gefüllt ist.

Ein solches Schutzöl kann auch als Gemisch aus einem Graphitschaum und Öl ersetzt sein.

Wichtig ist jedoch, dass keine korrosionsbehafteten Laufflächen mehr für die zugeordneten Abdichtelemente vorhanden sind, weil der Austauschzylinder 20 mit seinen Laufflächen vollkommen korrosionsfrei und hochgenau bearbeitet ist.

Es wird noch angefügt, dass zur Verbesserung der Drucköleinführung der Kanal 14 jeweils verteilt am Umfang angeordnete Sacklöcher 15 im Deckel 3 eingeführt wird, um so eine gleichmäßige am Umfang verteilten Einlauf des Drucköls in den Druckölraum 29 zu gewährleisten.

Im gezeigten Ausführungsbeispiel weist das Verschlussgehäuse 18 einen durchgehenden Boden 19 auf. Auf dieses Ausführungsbeispiel ist die Erfindung jedoch nicht beschränkt.

Im Ausführungsbeispiel nach Figur 3 ist der Boden 19a durchbrochen und weist eine Öffnung 32 auf, durch die ein Wasserablauf aus der Einlauföffnung 4 für den Einzugsnippel 2 ausgebildet sein kann oder durch die auch ein Druckmedium, insbesondere Druckluft, eingeführt werden kann, um die Einlauföffnung 4 von Verschmutzungen freizublasen.

Ebenso ist es möglich, an die Öffnung 32 einen Unterdruck anzulegen, um aus der Einlauföffnung 4 Material oder Flüssigkeit abzusaugen.

Bei diesem Ausführungsbeispiel ist demzufolge erforderlich, dass ein Austauschzylinder 30 mit Hilfe von O-Ringen 31 auf der Oberseite des Bodens 19 aufsitzt und jenseits der O-Ringe 31 Freistellungen 35 vorhanden sind, die vom Drucköl beaufschlagt sind.

Auf diese Weise ist es möglich, das Drucköl nicht nur über die Druckzuführung 13 einzuführen, sondern an ganz anderen Stellen im Gehäuse, beispielsweise über die Druckzuführungen 13a oder 13b.

Die Figur 1 zeigt im übrigen in Verbindung mit Figur 3 auch noch, dass am Deckel 3 sogenannte Abdrückschrauben 22 vorhanden sind, um beim Lösen der Schrauben 21 den Deckel störungsfrei von der Oberseite des Gehäuses 18 abnehmen zu können.

In allen Ausführungsbeispielen bildet jedenfalls die Seitenwand 24 des Austauschzylinders 20, 30 eine innere Zylinderwand 25 für die abdichtende Abstützung des Kolbens 6. Die dort angeordnete Abdichtung trennt demzufolge den Ölraum 29 von dem luft- oder ölgefüllten Zylinderraum 11, der in der Regel drucklos ist.

Die Figur 4 zeigt als weiteres Ausführungsbeispiel, dass der Austauschzylinder 30 sich auch mit einem axialen Ansatz 36 in die Öffnung 32 am Schnellspanngehäuse 18 hinein erstrecken kann. Es müssen dann entsprechende Abdichtelemente vorhanden sein, die im Ausführungsbeispiel nach Figur 3 im Bodenbereich angeordnet sind.

Auch hier gelten die gleichen Erläuterungen, wie vorstehend angegeben. Es ist erkennbar, dass die Abdichtelemente 31 für den Austauschzylinder 20, 30 an eine andere Stelle, nämlich in den Bereich der Öffnung 32, verlegt wurden.

Aus beiden Ausführungsbeispielen nach Figur 3 und 4 ist auch erkennbar, dass man die Öffnung, welche durch den Austauschzylinder 20, 30 hindurchgeht, mit einem Reduziereinsatz 33 versehen kann, der bevorzugt dort eingeschraubt ist und der eine Reduzierbohrung 34 aufweist. In diesem Fall könnte durch diese Reduzierbohrung ein Luftstrom mit Druckluft hindurchgeführt werden.

Die Figur 5 zeigt, dass anstatt der relativ klein dimensionierten Öffnung 32 auch eine sehr große Öffnung 28 im Bodenbereich des Verschlussgehäuses 18 vorgesehen werden kann, um so eine größtmögliche Freistellung für den Austauschzylinder 20, 30 zu ermöglichen.

Durch derartige, großdimensionierte Öffnungen 28 ist ein optimaler Späneabfluss beim Bearbeiten der Verschlussgehäuse 18 möglich.

Bei der Anbringung einer sehr groß dimensionierten Öffnung 28 ist auch der Verzug bei der Bearbeitung und insbesondere beim Härten des Verschlussgehäuses 18 nur minimal oder nicht berücksichtigungsnotwendig.

In diesem Ausführungsbeispiel ist gleichzeitig gezeigt, dass der vorher luftgefüllte Zylinderraum 11 nun mit einem Schutzöl gefüllt ist, welches durch einen Verschlussstopfen 38 hindurch über eine Einfüllbohrung 37 in den Zylinderraum 11 eingeführt wird. Es ergibt sich damit, dass der obere Teil 11 b des Zylinderraums mit dem Schutzöl gefüllt ist, welches durch einen Verbindungskanal 42 durch den Kolben 6 hindurch auch in den unteren Bereich gelangt, dort wo das Federpaket 12 angeordnet ist.

Damit ist klar, dass alle im Wesentlichen vorher luftberührten Teile mit dem Schutzöl gefüllt sind, wodurch sich ein Schutzölraum 41 im inneren des Verschlussgehäuses 18 bildet, der an und für sich drucklos ist.

Bei dem Versagen der Abdichtung 43 zwischen dem druckölbeaufschlagten Ölraum 29 und dem im Wesentlichen druckfreien Schutzölraum 41 kommt es nun zu einem Eindringen von Drucköl in den Schutzölraum 41, wodurch sich dort im gesamten Zylinderraum 11 der Druck erhöht und schließlich das Schutzöl über die Einfüllbohrung 37 auf die Rückseite des Verschlussstopfens 38 wirkt, der bei einer bestimmten Druckerhöhung abgesprengt wird. Auf diese Weise ist von außen ohne Weiteres ein Versagen der Abdichtungen erkennbar, und es wird eine unwiderrufliche Selbstblockierung der Schnellspann-Vorrichtung mit Sicherheit vermieden.

Gleichzeitig treten die in der allgemeinen Beschreibung angegebenen Vorteile ein, nämlich dass die vorher luftberührten und korrosionsanfälligen Teile im Innenraum des Zylinderraumes 11 von Schutzöl beaufschlagt sind, hierdurch geschmiert werden und zusätzlich vor Korrosion geschützt werden.

Aufgrund der Füllung des gesamten Schutzölraums 41 mit dem genannten Schutzöl wird auch das Entstehen von Kondenswasser verhindert.

Im übrigen gelten alle anderen Erläuterungen, die anhand der Figuren 1 bis 4 gegeben wurden, auch für die nachfolgenden Figuren 5 bis 8. Dies gilt auch für den allgemeinen Beschreibungsteil. Aus diesem Grunde wird auch auf Figur 1 und die dortige Seitenwand 27 im Verschlussgehäuse 18 hingewiesen. Dort ist erkennbar, dass der Deckel mit einem Abdichtelement lediglich an dieser sehr kurzen und nur wenig zu bearbeitenden Seitenwand 27 anliegt, während die übrige Fläche dieser Seitenwand (die vorherige Zylinderwand 26 des Gehäuses nun erfindungsgemäß von dem Austauschzylinder 20, 30 und dessen korrosionsfrei ausgebildeten Laufflächen ersetzt ist.

In den Figuren 6 und 7 sind Einzelheiten der Darstellung nach Figur 5 eingezeichnet. Aus der Figur 7 ist erkennbar, dass der Kanal der Einfüllbohrung 37 radial einwärts gerichtet in den Zylinderraum 11 eintaucht, um dort das Schutzöl zuzuführen.

Die Figur 8 zeigt die Ausführungsform nach Figur 5 im entspannten Zustand. Dort ist erkennbar, dass über die Druckzuführung 13 das Drucköl in den Ölraum 29 eingeführt wurde und hierdurch der Kolben 6 entgegen der Kraft des Federpaketes 12 nach unten hin verschoben wurde. Gleichzeitig verschiebt sich somit auch das im unteren Zylinderraum 11 a gelagerte Schutzöl über den Verbindungskanal 42 durch den Kolben 6 hindurch nach oben in den oberen Zylinderraum 11 b.

Hieraus ist also erkennbar, dass der Schutzölraum 41 den gesamten Zylinderraum 11, 11a, 11b bildet.

### Zeichnungslegende

- 1: Schnellspann-Vorrichtung
- 2: Einzugsnippel
- 3: Deckel
- 4: Einlauföffnung
- 5: Verriegelungskörper
- 6: Kolben
- 7: Schräge (Nippel 2)
- 8: Schräge (Kolben 6)
- 9: Anschlagfläche
- 10: Schräge (Kolben 6)
- 11: Zylinderraum 11a, 11b
- 12: Federpaket
- 13: Druckzuführung 13a, 13b
- 14: Kanal
- 15: Sackloch
- 16: radialer Spalt
- 17: O-Ring
- 18: Verschlussgehäuse oder Tisch
- 19: Boden 19a
- 20: Austauschzylinder
- 21: Schraube
- 22: Abdrückschraube
- 23: Boden (Austauschzylinder 20)
- 24: Seitenwand (Austauschzylinder 20)
- 25: Zylinderwand (Austauschzylinder 20)
- 26: Zylinderwand (Teil 18)
- 27: Seitenwand (Teil 18)
- 28: Öffnung (Teil 18)
- 29: Ölraum
- 30: Austauschzylinder
- 31: O-Ring
- 32: Öffnung
- 33 Reduziereinsatz: 34 Reduzierbohrung
- 35 Freistellung: 36 Ansatz
- 37 Einfüllbohrung: 38 Verschlussstopfen
- 39 Palette oder Werkstück: 40 Schraube
- 41 Schutzölraum: 42 Verbindungskanal 43 Abdichtung

## Patentansprüche

1. Schnell-Spannvorrichtung mit Austauschzylinder, welche ein Zylindergehäuse mit einem Deckel (3) aufweist, der mit mehreren Schrauben (21) auf der Oberseite einer Verschlussplatte oder einem Maschinentisch (18) aufgeschraubt ist, wobei durch den Deckel (3) eine Aufnahmeöffnung ausgebildet ist, welcher in den Einzugsnippel (2) verriegelbar eintaucht, **dadurch gekennzeichnet, dass** im Gehäuse der Schnellspann-Vorrichtung (1) mindestens ein Austauschzylinder (20, 30) abdichtend eingesetzt ist, der mindestens die Laufflächen für den Kolben (6) und den Federraum für das Federpaket (12) ausbildet.

2. Schnellspannvorrichtung nach Anspruch 1, **dadurch gekennzeichnet, dass** der Austauschzylinder (20, 30) insgesamt rostfrei ausgebildet ist und einen topfförmigen, vorzugsweise durchgehenden Boden (23) aufweist, an den sich axial nach oben gerichtete flanschartige Seitenwände (24) werkstoffeinstückig oder über zugeordnete Befestigungsmittel anschließen, welche die ursprünglichen, korrosionsbehafteten Zylinderwände (26) abdecken.

3. Schnellspannvorrichtung nach Anspruch 1 und 2, **dadurch gekennzeichnet, dass** der Boden (19a) des Austauschzylinders (20, 30) durchbrochen ist und eine Öffnung (32) aufweist, durch welche ein Wasserablauf aus der Einlauföffnung (4) für den Einzugsnippel (2) ausgebildet ist, Druckluft eingeführt, ein Unterdruck angelegt oder Drücköl in die Freistellungen (35) geleitet wird.

4. Schnellspannvorrichtung nach Anspruch 1 bis 3, **dadurch gekennzeichnet, dass** der Austauschzylinder (30) einen axialen Ansatz (36) aufweist, welcher sich in die Öffnung (32) am Schnellspanngehäuse (18) erstreckt und mit entsprechenden Abdichtelementen (O-Ring 31) abgedichtet ist.

5. Schnellspannvorrichtung nach Anspruch 1 bis 4, **dadurch gekennzeichnet, dass** die Laufflächen für den Kolben (6) und der Raum für das Federpaket (12) einen rostfreien Stahl aufweisen.

6. Schnellspannvorrichtung nach den Ansprüchen 1 bis 5, **dadurch gekennzeichnet, dass** die Rostfreiheit an den entsprechenden korrosionsgefährdeten Oberflächen des Austauschzylinders (20, 30) mittels Nitrieren, Verchromen, Vernickeln und vergleichbarem ausgebildet ist.

7. Schnellspannvorrichtung nach den Ansprüchen 1 bis 6, **dadurch gekennzeichnet, dass** der Austauschzylinder (20, 30) von der Oberseite oder von der Unterseite in das Gehäuse einsetzbar ist und aufgrund der verwendeten Abdichtelemente (O-Ringe 17) schwimmend in der Ausnehmung des Gehäuses 18 gelagert ist und die Laufflächen für den Kolben (6) und den Aufnahmeraum für das Federpaket (12) ausbilden.

8. Schnellspannvorrichtung nach den Ansprüchen 1 bis 7, **dadurch gekennzeichnet, dass** die Seitenwand (24) mittels einem radialen Spiel zur Zylinderwand (26) einen großvolumigen Stützraum ausbildet und der von dem Druckmedium beaufschlagte Druckraum (29) mit relativ geringer Fläche sich in den Raum am Außenumfang der Zylinderwand (26) mittels Druckzuführung (13) und einen zugeordneten Kanal (14) erstreckt und die Seitenwand (24) stabilisiert, wodurch die Seitenwand (24) eine verminderte Materialstärke aufweist.

9. Schnellspannvorrichtung nach den Ansprüchen 1 bis 8, **dadurch gekennzeichnet, dass** der Zylinderraum (11) luftgefüllt oder mit einer Schutzgasatmosphäre gefüllt ist.

10. Schnellspannvorrichtung nach den Ansprüchen 1 bis 9, **dadurch gekennzeichnet, dass** ein Austausch des Austauschzylinders (20, 30) vorzugsweise ein Austausch neuer Garnituren für den Kolben (6), das Federpaket (12) und die Verriegelungskörper (5) aufweist, welche vorzugsweise ebenfalls korrosionsbeständig ausgebildet sind.

11. Schnellspannvorrichtung nach den Ansprüchen 1 bis 10, **dadurch gekennzeichnet, dass** der Austauschzylinder (20, 30) abdichtend in das Gehäuse (18) eingesetzt ist, dass er die vorherigen, korrosionsanfälligen Laufflächen ersetzt und radial einwärts gerichtete, mit geringerem Durchmesser gegebene Laufflächen für einen kleineren Kolben und ein dazugehörendes Federpaket bildet, womit ein Reparatursatz für eine Schnellspann-Vorrichtung (1) ausgebildet ist.

12. Schnellspannvorrichtung nach den Ansprüchen 1 bis 11, **dadurch gekennzeichnet, dass** der Austauschzylinder (20, 30) alle Laufflächen und korrosionsgefährdeten Stellen einer Schnellspann-Vorrichtung (1) aufweist, welche korrosionsfrei ausgebildet sind.

13. Schnellspannvorrichtung nach den Ansprüchen 1 bis 12, **dadurch gekennzeichnet, dass** lediglich eine relativ kleine Fläche als Abdichtfläche der Schnellspann-Vorrichtung bearbeitet ist, wobei die restlichen Ausnehmungen im Gehäuse, im Maschinentisch oder im Verschlussgehäuse durch einen korrosionsfreien Austauschzylinder (20, 30) ersetzt sind.

14. Schnellspannvorrichtung nach den Ansprüchen 1 bis 13, **dadurch gekennzeichnet, dass** alle luftberührten und korrosionsgefährdeten Räume im Innenraum des Gehäuses mit einem Schutzöl gefüllt sind, wodurch ein dauergeschmiertes Gehäuse ausgebildet ist.

15. Schnellspannvorrichtung nach den Ansprüchen 1 bis 16, **dadurch gekennzeichnet, dass** eine Kolbenverschiebung in dem mit Schützöl gefüllten Verschiebungsraum des Kolbens (6) das Schützöl an die Unterseite des Kolbens führt und eine unerwünschte Druckerhöhung vermeidet.

16. Schnellspannvorrichtung nach den Ansprüchen 1 bis 15, **dadurch gekennzeichnet, dass** das mit Schutzöl gefüllte Gehäuse eine Sicherheitsfunktion aufweist, wobei ein Sicherheitsstopfen in einer Einfüllöffnung des Schutzöls verdrängt ist, wenn das Schutzöl eine Druckerhöhung aufgrund einer Undichtigkeit in Richtung auf den ölgefüllten Druckraum des Kolbens (6) aufweist und das unter hohem Druck stehende Druckmedium in den mit Schutzöl gefüllten Federraum des Gehäuses (18) eintritt.

17. Schnellspannvorrichtung nach den Ansprüchen 1 bis 16, **dadurch gekennzeichnet, dass** die Sicherheitsfunktion eine Selbstarretierung der Schnellspann-Vorrichtung aufgrund eines radial nach außen liegenden Druckraum des Kolbens (6) und einen radial einwärts gelegenen Schutzölraum vermeidet.

18. Schnellspannvorrichtung nach den Ansprüchen 1 bis 17, **dadurch gekennzeichnet, dass** das Verschlussgehäuse (18) im Bodenbereich eine relativ große Öffnung (28) aufweist, welche eine größtmögliche Freistellung für den Austauschzylinder (20, 30) für einen optimierten Späneabfluss bei der Bearbeitung des Verschlussgehäuses (18) und einen relativ geringen Verzug beim Härten des Verschlussgehäuses (18) ausbildet.

19. Schnellspannvorrichtung nach den Ansprüchen 1 bis 18, **dadurch gekennzeichnet, dass** der Deckel (3) einen Verschlussstopfen (38) aufweist, wobei der luftgefüllte Zylinderraum (11) mit einem Schutzöl über eine Einfüllbohrung (37) im oberen Zylinderraum (11 b) gefüllt wird und durch einen Verbindungskanal (42) im Kolben (6) in den unteren Bereich des Zylinderraums (11) mit den angeordneten Federpaketen (12) fließt, wodurch sich im inneren des Verschlussgehäuses (18) ein relativ druckloser Schutzölraum (41) ausbildet und die Bildung von Kondenswasser vermieden.

## Claims

1. Quick connect coupling with changeable cylinder, which has a cylinder housing with a cover (3), which is screwed on the upper side of a closure plate or a machine table (18) by means of a plurality of screws (21), a receiving opening being formed through the cover (3) which enters the draw-in nipple so as to be lockable, **characterised in that** at least one changeable cylinder (20, 30) is inserted in the housing of the quick connect coupling (1) in a sealing manner and forms at least the running faces for the piston (6) and the spring chamber for the spring assembly (12).

2. Quick connect coupling according to claim 1, **characterised in that** the changeable cylinder (20, 30) is formed so as to be rust-proof as a whole and has a pot-shaped, preferably continuous base (23), to which axially upwardly directed flange-like side walls (24) are attached in a material-integrating manner or by means of associated fastening means, which cover the original cylinder walls (26) which are affected by corrosion.

3. Quick connect coupling according to claim 1 and 2, **characterised in that** the base (19a) of the changeable cylinder (20, 30) is pierced and has an opening (32), through which a water outlet from the inlet opening (4) for the draw-in nipple (2) is formed, compressed air is introduced, a reduced pressure is applied or compressed oil is guided into the free positions (35).

4. Quick connect coupling according to claim 1 to 3, **characterised in that** the changeable cylinder (30) has an axial projection (36), which extends into the opening (32) on the quick connect housing (18) and is sealed with corresponding sealing elements (O-ring 31).

5. Quick connect coupling according to claim 1 to 4, **characterised in that** the running faces for the piston (6) and the chamber for the spring assembly (12) comprise a rust-proof steel.

6. Quick connect coupling according to claims 1 to 5, **characterised in that** the rust-proofness on the corresponding surfaces of the changeable cylinder (20, 30) which are at risk of corrosion is formed by nitriding, chrome-plating, nickel-plating and the like.

7. Quick connect coupling according to claims 1 to 6, **characterised in that** the changeable cylinder (20, 30) can be inserted into the housing from the upper side or from the lower side and because of the sealing elements used (O-rings 17), is mounted in a floating manner in the recess of the housing (18) and forms the running faces for the piston (6) and the receiving chamber for the spring assembly (12).

8. Quick connect coupling according to any one of claims 1 to 7, **characterised in that** the side wall (24) forms a large-volume support chamber by means of a radial clearance from the cylinder wall (26) and the pressure chamber (29) loaded by the pressure medium with a relatively small area extends into the chamber on the outer periphery of the cylinder wall (26) by means of the supply of pressure (13) and an associated channel (14) and stabilises the side wall (24), so the side wall (24) has a reduced material thickness.

9. Quick connect coupling according to claims 1 to 8, **characterised in that** the cylinder chamber (11) is filled with air or with a protective gas atmosphere.

10. Quick connect coupling according to claims 1 to 9, **characterised in that** an exchange of the changeable cylinder (20, 30) preferably comprises an exchange of new fittings for the piston (6), the spring assembly (12) and the locking body (5), which are preferably also corrosion-resistant.

11. Quick connect coupling according to any one of claims 1 to 10, **characterised in that** the changeable cylinder (20, 30) is inserted into the housing (18) in a sealing manner and **in that** it replaces the previous running faces susceptible to corrosion and forms radially inwardly directed running faces provided with a smaller diameter for a smaller piston and an associated spring assembly, and thus a repair set is formed for a quick connect coupling (1).

12. Quick connect coupling according to claims 1 to 11, **characterised in that** the changeable cylinder (20, 11) has all the running faces and locations, which are at risk of corrosion, of a quick connect coupling (1), and are corrosion-free.

13. Quick connect coupling according to claims 1 to 12, **characterised in that** only a relatively small face is machined as the sealing face of the quick connect coupling, the remaining recesses in the housing, in the machine table or in the closure housing being replaced by a corrosion-free changeable cylinder (20, 30).

14. Quick connect coupling according to claims 1 to 13, **characterised in that** all the spaces in the interior of the housing which are touched by air and at risk of corrosion are filled with a protective oil, so a permanently lubricated housing is formed.

15. Quick connect coupling according to claims 1 to 16 [sic], **characterised in that** a piston displacement in the displacement chamber of the piston (6) filled with protective oil guides the protective oil to the lower side of the piston and avoids an undesired pressure increase.

16. Quick connect coupling according to claims 1 to 15, **characterised in that** the housing filled with protective oil has a safety function, a safety plug being displaced in a filling opening of the protective oil if the protective oil has a pressure increase because of a leakage in the direction of the oil-filled pressure chamber of the piston (6) and the pressure medium under a high pressure enters the spring chamber of the housing (18) filled with protective oil.

17. Quick connect coupling according to any one of claims 1 to 16, **characterised in that** the safety function avoids a self-locking of the quick connect device because of a radially outwardly located pressure chamber of the piston (6) and a radially inwardly located protective oil chamber.

18. Quick connect coupling according to any one of claims 1 to 17, **characterised in that** the closure housing (18) in the base region has a relatively large opening (28), which forms a free position which is as large as possible for the changeable cylinder (20, 30) for an optimised flowing away of chips when machining the closure housing (18) and relatively little distortion during hardening of the closure housing (18).

19. Quick connect coupling according to claim 1 to 18, **characterised in that** the cover (3) has a closure plug (38), the air-filled cylinder chamber (11) being filled with a protective oil via a filling bore (37) in the upper cylinder chamber (11b) flowing through a connecting channel (42) in the piston (6) into the lower region of the cylinder chamber (11) with the arranged spring assemblies (12), so a relatively pressureless protective oil chamber (41) is formed in the interior of the closure housing (18) and the formation of condensation water is avoided

## Revendications

1. Dispositif de serrage rapide avec un cylindre échangeable, comprenant une enveloppe cylindrique pourvue d'un couvercle (3) qui est vissé à l'aide de plusieurs vis (21) sur le côté supérieur d'une plaque de fermeture ou sur une table de machine-outil (18), le couvercle (3) définissant une ouverture de réception dans laquelle un raccord (2) entre de manière à pouvoir être verrouillé, **caractérisé en ce qu'**il est prévu de manière étanche dans l'enveloppe du dispositif de serrage rapide (1) au moins un cylindre échangeable (20, 30) qui forme au moins les surfaces de roulement pour le piston (6) et l'espace de ressort pour le paquet de ressorts (12).

2. Dispositif de serrage rapide selon la revendication 1, **caractérisé en ce que** le cylindre échangeable (20, 30) est conçu dans l'ensemble pour être inoxydable et comporte un fond (23) en forme de godet, de préférence continu, auquel font suite, d'une seule pièce ou par l'intermédiaire de moyens de fixation associés, des parois latérales en forme de collerette (24) dirigées axialement vers le haut, qui couvrent les parois de cylindre initiales (26) sujettes à la corrosion.

3. Dispositif de serrage rapide selon les revendications 1 et'2, **caractérisé en ce que** le fond (19a) du cylindre échangeable (20, 30) est percé et présente une ouverture (32) grâce à laquelle un écoulement d'eau est formé à partir de l'ouverture d'introduction (4) pour le raccord (2), de l'air comprimé est introduit, une dépression est appliquée ou de l'huile sous pression est amenée dans les dégagements (35).

4. Dispositif de serrage rapide selon les revendications 1 à 3, **caractérisé en ce que** le cylindre échangeable (30) présente une saillie axiale (36) qui s'étend dans l'ouverture (32) de l'enveloppe de serrage rapide (18) et qui est rendue étanche grâce à des éléments d'étanchéité appropriés (joint torique 31).

5. Dispositif de serrage rapide selon les revendications 1 à 4, **caractérisé en ce que** les surfaces de roulement pour le piston (6) et l'espace pour le paquet de ressorts (12) comportent un acier inoxydable.

6. Dispositif de serrage rapide selon les revendications 1 à 5, **caractérisé en ce que** la propriété inoxydable des surfaces correspondantes du cylindre échangeable (20, 30) menacées de corrosion est obtenue par nitruration, chromage, nickelage et autres procédés comparables.

7. Dispositif de serrage rapide selon les revendications 1 à 6, **caractérisé en ce que** le cylindre échangeable (20, 30) est apte à être placé dans l'enveloppe par le côté supérieur ou par le côté inférieur, est monté de manière flottante dans le creux de ladite enveloppe (18) en raison des éléments d'étanchéité utilisés (joints toriques 17), et forme les surfaces de roulement pour le piston (6) et l'espace de réception pour le paquet de ressorts (12).

8. Dispositif de serrage rapide selon les revendications 1 à 7, **caractérisé en ce que** la paroi latérale (24), grâce à un jeu radial par rapport à la paroi cylindrique (26), forme un espace d'appui de grand volume, et l'espace de pression (29) contraint par l'agent de pression s'étend avec une surface relativement faible dans l'espace prévu sur la circonférence extérieure de la paroi cylindrique (26), grâce à une amenée de pression (13) et à un conduit associé (14), et stabilise ladite paroi latérale (24), qui présente de ce fait une épaisseur de matière réduite.

9. Dispositif de serrage rapide selon les revendications 1 à 8, **caractérisé en ce que** l'espace cylindrique (11) est rempli d'air ou est rempli d'une atmosphère de gaz protecteur.

10. Dispositif de serrage rapide selon les revendications 1 à 9, **caractérisé en ce qu'**un échange du cylindre échangeable (20, 30) comprend de préférence un échange de nouvelles garnitures pour le piston (6), le paquet de ressorts (12) et les corps de verrouillage (5) qui sont conçus de préférence pour résister à la corrosion, eux aussi.

11. Dispositif de serrage rapide selon les revendications 1 à 10, **caractérisé en ce que** le cylindre échangeable (20, 30) est placé de manière étanche dans l'enveloppe (18), **en ce qu'**il remplace les surfaces de roulement sensibles à la corrosion précédentes et forme des surfaces de roulement de plus faible diamètre dirigées radialement vers l'intérieur, pour un piston plus petit et un paquet de ressorts correspondant, ce qui forme un jeu de réparation pour un dispositif de serrage rapide (1).

12. Dispositif de serrage rapide selon les revendications 1 à 11, **caractérisé en ce que** le cylindre échangeable (20, 30) présente toutes les surfaces de roulement et tous les endroits menacés de corrosion d'un dispositif de serrage rapide (1) qui sont conçus pour être inoxydables.

13. Dispositif de serrage rapide selon les revendications 1 à 12, **caractérisé en ce que** seule une surface relativement petite est usinée comme surface d'étanchéité du dispositif de serrage rapide, les autres creux prévus dans l'enveloppe, dans la table de machine-outil ou dans l'enveloppe de fermeture étant remplacés par un cylindre échangeable inoxydable (20, 30).

14. Dispositif de serrage rapide selon les revendications 1 à 13,' **caractérisé en ce que** tous les espaces en contact avec l'air et menacés de corrosion à l'intérieur de l'enveloppe sont remplis d'une huile de protection, ce qui donne une enveloppe à graissage permanent.

15. Dispositif de serrage rapide selon les revendications 1 à 16, **caractérisé en ce qu'**un déplacement du piston dans l'espace de déplacement, rempli d'huile de protection, du piston (6) amène l'huile de protection sur le côté inférieur du piston et évite une augmentation de pression indésirable.

16. Dispositif de serrage rapide selon les revendications 1 à 15, **caractérisé en ce que** l'enveloppe remplie d'huile de protection présente une fonction de sûreté, étant précisé qu'un bouchon de sûreté est poussé dans une ouverture de remplissage pour l'huile de protection lorsque l'huile de protection présente une augmentation de pression, en raison d'une fuite, vers l'espace de pression du piston (6) qui est rempli d'huile, et que l'agent de pression soumis à une pression élevée entre dans l'espace de ressort de l'enveloppe (18) qui est rempli d'huile de protection.

17. Dispositif de serrage rapide selon les revendications 1 à 16, **caractérisé en ce que** la fonction de sûreté évite un autoblocage du dispositif de serrage rapide en raison d'un espace de pression du piston (6) qui est situé radialement vers l'extérieur, et un espace d'huile de protection situé radialement vers l'intérieur.

18. Dispositif de serrage rapide selon les revendications 1 à 17, **caractérisé en ce que** l'enveloppe de fermeture (18) présente dans la zone du fond une ouverture (28) relativement grande qui forme un dégagement maximal pour le cylindre échangeable (20, 30), pour une évacuation optimisée des copeaux lors de l'usinage de ladite enveloppe de fermeture (18), et pour une déformation relativement faible lors du durcissement de celle-ci.

19. Dispositif de serrage rapide selon les revendications 1 à 18, **caractérisé en ce que** le couvercle (3) présente un bouchon de fermeture (38), l'espace cylindrique rempli d'air (11) étant rempli d'une huile de protection par l'intermédiaire d'un perçage de remplissage (37) prévu dans l'espace cylindrique supérieur (11b), laquelle huile de protection coule par un conduit de liaison (42) du piston (6) dans la zone inférieure de l'espace cylindrique (11) contenant les paquets de ressorts (12), ce qui forme à l'intérieur de l'enveloppe de fermeture (18) un espace d'huile de protection (41) relativement sans pression et évite la formation d'eau de condensation.
